# EUROPÄISCHE PATENTSCHRIFT

(11) **EP 0 717 121 B1**
(45) Veröffentlichungstag und Bekanntmachung des Hinweises auf die Patenterteilung: **04.02.1998**
(21) Anmeldenummer: 95117032.3
(22) Anmeldetag: 28.10.1995
(51) Int. Cl.: C22C 13/02, C22C 13/00, F16C 17/00

(54) **Gleitlagerlegierung**
Bearing alloy
Palier à glissement

(30) Priorität: 12.11.1994 DE 4440477
(43) Veröffentlichungstag der Anmeldung: 19.06.1996
(73) Patentinhaber: Elektro-Thermit GmbH, D-45139 Essen (DE)
(72) Erfinder: Bohsmann, Michael, Dr., 89081 Ulm (DE); Koring, Rolf, D-41363 Jüchen (DE); Rühle, Manfred, Prof. Dr., D-71254 Ditzingen (DE); Steinhorst, Michael, Dr., D-45355 Essen (DE)
(74) Vertreter: Rotenberg, Klaus, Dr.

(56) Entgegenhaltungen:
- GB-A- 2 146 354
- CHEMICAL ABSTRACTS, vol. 108, no. 4, 25.Januar 1988 Columbus, Ohio, US; abstract no. 26024, & JP-A-62 170 418 (MITSUBISHI HEAVY INDUSTRIES LTD JAPAN) 27.Juli 1987
- KINGSBURY, G. R. 'asm handbook vol. 18, friction, lubrication and wear technology' 1992 , ASM INTERNATIONAL , MATERIALS PARK, OHIO 44073-0002, USA *seite 747-757, insb. seite 748-749* * Tabelle 2 *

## Beschreibung

Die Erfindung betrifft Gleitlagerlegierungen auf Zinn-Basis.

Lagerwerkstoffe auf Blei- und Zinnbasis besitzen gute Gleit-, Einlauf-, Einbett- und Notlaufeigenschaften.

Wird das Lager thermisch stärker belastet oder ist die statische und dynamische Belastung des Lagers höher, müssen hochzinnhaltige Lagermetalle eingesetzt werden.

Derartige Gleitlagerlegierungen gibt es nach nationalen und internationalen Standards, wie z. B. DIN ISO 4381, sowie nach Spezifikationen der Hersteller, wie z. B. TEGO V 738 (Th. Goldschmidt AG). Eine derartige Legierung weist gute Gleiteigenschaften, eine hohe statische und dynamische Belastbarkeit im hydrodynamischen Bereich, einen hohen Verschleißwiderstand sowie eine hohe Wärmehärte und Formstabilität auf. Sie finden Verwendung in Turbinen, Verdichtern, Kolben und Expansionsmaschinen.

Allen diesen Legierungen gemeinsam sind die Legierungsbestandteile Zinn, Antimon, Kupfer in unterschiedlicher Zusammensetzung je nach technischer Verwendung.

Zur Steigerung der technischen Eigenschaften wird in einigen der Legierungen Cadmium, Nickel, Arsen hinzulegiert. Dies geschieht bei der Legierung SnSb8Cu4Cd nach DIN ISO 4381 ebenso wie beispielsweise bei der Legierung TEGO V 738, die folgende Zusammensetzung aufweist:

| | |
|---|---|
| Pb | max. 0,06% (Massenanteile) |
| Sn | 80,5 % |
| Cd | 1,2 % |
| Cu | 5,5 % |
| Sb | 12 % |
| Ni | 0,3 % |
| As | 0,5 % |

Obwohl es unter dem Gesichtspunkt der potentiellen Umweltbeeinträchtigung wünschenswert wäre, ohne die giftigen Metalle Cd, Ni und As zu arbeiten, waren diese Elemente doch unentbehrlich, da insbesondere unter dem Gesichtspunkt der erzielten Kornfeinung und Druckfestigkeit keine technisch sinnvolle Alternative bekannt war.

Es war nun Aufgabe der Erfindung, eine Gleitlagerlegierung zu schaffen, die keines dieser genannten Metalle als Bestandteil aufweist, ohne daß gegenüber dem Stand der Technik Einbußen hinsichtlich der geforderten Eigenschaften in Kauf genommen werden müßten.

Die Erfindung betrifft demnach eine Gleitlagerlegierung auf Zinn-Basis, die aus 6 bis 15 Gew.-% Antimon, 3 bis 10 Gew.-% Kupfer, 0,05 bis 1 Gew.-% Silber, 0,1 bis 2 Gew.-% Zink und Zinn als Rest besteht.

Vorteilhaft sind Silbergehalte von 0,05 bis 0,15 Gew.-% und Zinkgehalte von 0,5 bis 0,7 Gew.-%.

Besonders bevorzugt weist sie einen Silbergehalt von 0,1 Gew.-% und einen Zinkgehalt von 0,6 Gew.-% auf.

Gleitlagerlegierung gemäß der vorliegenden Erfindung zeigen überdies überraschenderweise sogar Vorteile hinsichtlich der mechanischen Eigenschaften gegenüber dem Stand der Technik auf, wie dem Vergleich der technologischen Daten mit denen von TEGO V 738 zu entnehmen ist:

| | **TEGO V 738** | **wie TEGO V 738, jedoch ohne Cd, Ni, As mit 0,1% Ag, 0,6 % Zn** |
|---|---|---|
| 0,2 % Stauchgrenze | 80 N/mm² | 90 N/mm² |

Wie am Wert der Sigma 0,2 Stauchgrenze zu erkennen ist, wird ein Vorteil von etwa 10 % erzielt, was sich in gleichem Umfang bei der zulässigen Druckbeanspruchung im Lager auswirkt.

Gegen Dauerschlagbiegebeanspruchung ist die Legierung ebenfalls deutlich widerstandsfähiger.

Die Verarbeitung der Legierung ist sowohl beim Gießverfahren als auch beim Lötverfahren stark vereinfacht, da selbst bei ungünstigen Bedingungen keine Bildung von Poren auftritt.

## Patentansprüche

1. Gleitlagerlegierung auf Zinn-Basis mit Antimon und Kupfer, dadurch gekennzeichnet, daß sie aus 6 bis 15 Gew.-% Antimon, 3 bis 10 Gew.-% Kupfer, 0,05 bis 1 Gew.-% Silber, 0,1 bis 2 Gew.-% Zink und Zinn als Rest besteht.

2. Gleitlagerlegierung gemäß Anspruch 1, dadurch gekennzeichnet, daß sie einen Silbergehalt von 0,05 bis 0,15 Gew.-% aufweist.

3. Gleitlagerlegierung gemäß Anspruch 2, dadurch gekennzeichnet, daß sie einen Silbergehalt von 0,1 Gew.-% aufweist.

4. Gleitlagerlegierung gemäß den Ansprüchen 1 bis 3, dadurch gekennzeichnet, daß sie einen Zinkgehalt von 0,5 bis 0,7 Gew.-% aufweist.

5. Gleitlagerlegierung gemäß den Ansprüchen 1 bis 4, dadurch gekennzeichnet, daß sie einen Zinkgehalt von 0,6 Gew.-% aufweist.

## Claims

1. Tin-based plain-bearing alloy with antimony and copper, characterized in that it consists of 6 to 15% by weight of antimony, 3 to 10% by weight of copper, 0.05 to 1% by weight of silver and 0.1 to 2% by weight of zinc, the remainder being tin.

2. Plain-bearing alloy according to Claim 1, characterized in that it has a silver content of 0.05 to 0.15% by weight.

3. Plain-bearing alloy according to Claim 2, characterized in that it has a silver content of 0.1% by weight.

4. Plain-bearing alloy according to Claims 1 to 3, characterized in that it has a zinc content of 0.5 to 0.7% by weight.

5. Plain-bearing alloy according to Claims 1 to 4, characterized in that it has a zinc content of 0.6% by weight.

## Revendications

1. Alliage pour palier à glissement à base d'étain, contenant de l'antimoine et du cuivre, caractérisé en ce qu'il est composé de 6 à 15% en poids d'antimoine, de 3 à 10% en poids de cuivre, de 0,05 à 1% en poids d'argent, de 0,1 à 2% en poids de zinc et pour le reste d'étain.

2. Alliage pour palier à glissement suivant la revendication 1, caractérisé en ce qu'il présente une teneur en argent de 0,05 à 0,15% en poids.

3. Alliage pour palier à glissement suivant la revendication 2, caractérisé en ce qu'il présente une teneur en argent de 0,1% en poids.

4. Alliage pour palier à glissement suivant les revendications 1 à 3, caractérisé en ce qu'il présente une teneur en zinc de 0,5 à 0,7% en poids.

5. Alliage pour palier à glissement suivant les revendications 1 à 4, caractérisé en ce qu'il présente une teneur en zinc de 0,6% en poids.
